# EUROPÄISCHE PATENTSCHRIFT

(11) **EP 0 504 708 B1**
(45) Veröffentlichungstag und Bekanntmachung des Hinweises auf die Patenterteilung: **09.08.1995**
(21) Anmeldenummer: 92104057.2
(22) Anmeldetag: 10.03.1992
(51) Int. Cl.: B29C 70/24, B65D 90/02

(54) **Faserverstärker Kunststoffhohlkörper**
Fibre reinforced plastic hollow object
Corps creux en matière plastique renforcé de fibres

(30) Priorität: 18.03.1991 DE 9103282 U; 14.12.1991 DE 9115518 U; 13.06.1991 DE 9107320 U
(43) Veröffentlichungstag der Anmeldung: 23.09.1992
(73) Patentinhaber: PARABEAM Industrie- en Handelsonderneming B.V., NL-5705 AL Helmond (NL)
(72) Erfinder: André de la Porte, Gilles, NL- Rozendaal (NL); Swinkels, Cornelis Theodorus Johannes Maria, NL-5704 KX Helmond (NL)
(74) Vertreter: Sparing - Röhl - Henseler Patentanwälte

(56) Entgegenhaltungen:
- EP-A- 0 320 715
- CH-A- 551 859
- DE-A- 2 337 919
- DE-B- 1 248 005
- KUNSTSTOFFE Bd. 80, Nr. 9, September 1990, MüNCHEN Seiten 1003 - 1007; F. HÖRSCH: 'Dreidimensionale Verstärkungsmaterialien für Faserverbundwerkstoffe'

## Beschreibung

Die Erfindung betrifft einen faserverstärkten Kunststoffhohlkörper nach dem Oberbegriff des Anspruchs 1.

Derartige faserverstärkten Kunststoffhohlkörper werden durch Wickeln harzgetränkter Rovings oder Kombinationen verschiedener Glasseidenmaterialien auf einer rotierenden Trommel bzw. Kern hergestellt, wobei als Harze vorzugsweise die zu einem Duroplast härtenden Polyester- und Epoxidharze verwendet werden. Die Wicklung kann in verschiedenen Mustern mit wählbaren Steigungswinkeln und Schichtenzahl erfolgen, wobei vorzugsweise Wandstärken von 1 bis 4 cm aufgebaut werden. Wegen der hohen Belastbarkeit können diese Kunststoffhohlkörper als Druckrohre, Tankbehälter, Türme und dgl. Verwendung finden. Als nachteilig hat sich jedoch der langsame Aufbau der Wanddicke und die Gefahr des Durchsickerns von Leckage erwiesen.

Aus DE-A-26 58 111 ist ein doppelwandiger Tank aus glasfaserverstärktem Kunststoff zur Lagerung von Flüssigkeiten bekannt gemäß dem Oberbegriff des Anspruchs 1, der einen aus Glasfasermatten und Kunststoff fertig geformten Innenbehälter umfaßt, dessen Außenflächen mit einer gas- bzw. flüssigkeitsdurchlässigen Distanzschicht verbunden sind und unmittelbar auf diese Distanzschicht die Wandungen eines aus Glasfasern und aushärtbaren Kunststoff gebildeten Außenbehälters aufgebracht sind. Die Distanzschicht führt dabei zu einer Festverbindung zwischen Innen- und Außenbehälter, damit diese gemeinsam statisch tragend wirken. Gebildet wird die Distanzschicht von einem porösen Zusammenschluß eines körnigen Materials oder einer großen Anzahl vorgeformter Distanzkörper, die dicht an dicht aneinandergereiht, z.B. in Form von schraubenförmigen Wickeln auf die Außenflächen des Innenbehälters aufbringbar sind und den Träger für die Wandungen des Außenbehälters bilden.

Aufgabe der Erfindung ist es daher, einen faserverstärkten Kunststoffhohlkörper nach dem Oberbegriff des Anspruchs 1 zu schaffen, der hochbelastbar ist und dabei einen schnellen Aufbau der Wanddicke erlaubt und sicher in bezug auf die Gefahr des Durchsickerns von Leckage ist.

Diese Aufgabe wird gemäß dem kennzeichnenden Teil des Anspruchs 1 gelöst.

Hierdurch wird ein faserverstärkter Kunststoffhohlkörper geschaffen, der durch das Einlegen einer den Hohlkörper umgebenden und von einer inneren und äußeren Verkleidungsschicht ummantelten, doppelwandigen Haut aus einer unaufgeschnittenen Doppelpolware eine innere Sicherheitswand besitzt. Die nach Härtung des Harzes versteifte Doppelpolware schließt zwischen der durch die versteiften Polfäden beabstandeten Ober- und Unterware einen Hohlraum ein, in dem Detektoren für eine Leckanzeige eingebaut werden können. Die Ober- und Unterware bilden zudem zwei hintereinanderliegende versteifte Wandungen, die den Hohlkörperraum nach außen abschirmen. Sollte durch die innenliegende Wandung ein Fluid durchsickern können, so wird dieses von dem Hohlraum aufgefangen und von der zweiten Wandung an einem weiteren Sickern nach außen gehindert. Die doppelwandige Haut erlaubt somit nicht nur ein frühzeitiges Erkennen einer Leckage, sondern verhindert auch deren Austritt zumindest während einer gewissen Zeitdauer.

Die doppelwandige Haut aus einer unaufgeschnittenen Doppelpolware kann insbesondere bei zylinderförmigen Körpern von einer Wicklung eines oder mehrerer Gewebebänder aufgebaut sein, wobei die Wicklung vorzugsweise mit seitlich offenen aneinanderliegenden Bandkanten erfolgt. Diese Wicklungsschicht ermöglicht so den Aufbau eines durchgehenden, sich über den Hohlkörperraum erstreckenden Sicherheitshohlraums. Desweiteren kann bei kugelförmigen Kunststoffhohlkörpern die doppelwandige Haut aus einzelnen gefügten Segmenten bestehen.

Für die aus Kett- und Schußfäden bestehende Ober- und Unterware sowie die Polfäden können hochfeste Fasern, wie z.B. aus Glas, verwendet werden. Die eingesetzten Fasern können dabei entweder als Stapelfasern zu Garnen versponnen sein oder als Mono- oder Multifilamente ausgebildet sein.

Die Polfäden können durch eine V- oder W-Bindung bei einer in Kettsamttechnik gewebten Doppelpolware eingelegt sein. Die Länge der Polfäden als Abstandshalter zwischen Ober- und Unterware kann 3 bis 8 mm betragen. Die Dichte kann in Abhängigkeit von dem Rauminhalt des Sicherheitshohlraums bei 20 bis 80 Polfäden/cm² liegen.

Zur Glättung der Wicklung hochfester Fasern gegenüber der Kernlage können Glasmatten zwischengelegt sein.

Zur Harztränkung der hochfesten Fasern, insbesondere Rovings, kann ein härtendes Reaktionsharz vorgesehen sein, wie z.B. ungesättigter Polyester, Epoxide, Vinylester, Phenol-, PUR-, Silicon (SI)-, Polyimid (PI)- oder Polyamidimid (PAI)-Harze.

Gemäß eines weiteren Ausführungsbeispiels kann die ein- oder mehrschichtige doppelwandige Haut aus unaufgeschnittener Doppelpolware für den Durchfluß eines Temperiermediums genutzt werden. Die Vorteile liegen in einer gleichmäßigen Wärmeübertragung oder -abführung für den Behälterinhalt. Dabei kann die Durchflußmenge des Temperiermediums neben der Flußgeschwindigkeit einfach durch die Wahl des Abstandes zwischen Ober- und Unterware eingestellt werden.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
- Fig. 1: zeigt schematisch einen Querschnitt eines ersten Ausführungsbeispiels eines faserverstärkten Kunststoffhohlkörpers,
- Fig. 2: zeigt schematisch einen Querschnitt eines zweiten Ausführungsbeispiels eines faserverstärkten Kunststoffhohlkörpers.
- Fig. 3 und Fig. 4: zeigen schematisch einen Querschnitt eines dritten und vierten Ausführungsbeispiels eines faserverstärkten Kunststoffhohlkörpers.

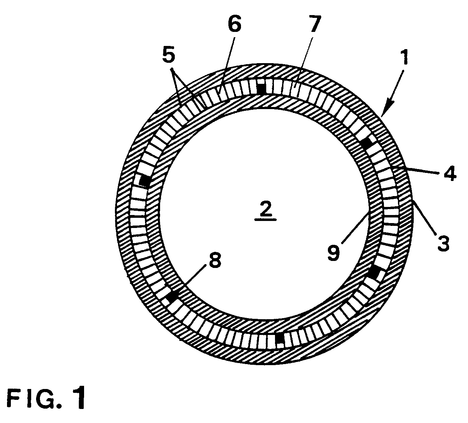

Figur 1 zeigt schematisch ein erstes Ausführungsbeispiel eines faserverstärkten Kunststoffhohlkörpers 1 mit einer rotationssymmetrischen, insbesondere zylinder- oder kugelförmigen Wandung, die einen Innenraum 2 umschließt. Kopf- und bodenseitig sind bei einer rohrförmigen Wandung Verschlußteile anbringbar. Der Innenraum 2 dient zur Lagerung bzw. Transport eines Fluids, besonders Chemikalien.

Die Wandung des Kunststoffhohlkörpers 1 umfaßt ein äußere Wicklung 3 hochfester Fasern, eine innere Wicklung 9 hochfester Fusern und eine Wicklung 4 eines oder mehrerer Bänder einer unaufgeschnittenen Doppelpolware, die als Kernlage zwischen einer äußeren Wicklung 3 hochfester Fasern und einer inneren Wicklung 9 hochfester Fasern angeordnet ist, wobei dieser Wicklungsverbund durch eine härtende Harztränkung der genannten Art verdichtet ist. Die Wicklungen 3, 4, 9 sind also ubereinandergewickelt und durch eine Harzhärtung verdichtet. Die Wicklung 3 der hochfesten Fasern ist nach einem wählbaren Muster mit wählbaren Steigungswinkeln und Wicklungszahl über die Wicklung 4 der Doppelpolware gewickelt. Als hochfeste Fasern können Rovings oder Kombinationen anderer Glasseidenerzeugnisse eingesetzt werden.

Die Wicklung 4 aus unaufgeschnittener Doppelpolware bildet eine doppelwandige Haut, die den Innenraum 2 des Kunstoffhohlkörpers 1 zumindest im Bereich der zylinderförmigen Wandung, vorzugsweise allseitig bei einem geschlossenen Hohlkörper, auskleidet. Die unaufgeschnittene Doppelpolware besteht aus einer Ober- und Unterware 5, die beabstandet zueinander angeordnet sind und durch eingelegte Polfäden 6 miteinander verbunden sind. Die Ober- und Unterware 5 bilden somit zwei mit Abstand zueinander liegende Wandungen, die einen Sicherheits- oder Detektorraum einschließen, dessen Rauminhalt nur teilweise durch die Polfäden 6 ausgefüllt ist, wodurch ein Sicherheitshohlraum entsteht. Dieser Sicherheitshohlraum ist unterteilt in eine Vielzahl einzelner durch jeweils Reihen benachbarter Polfäden 6 begrenzter Sicherheits-Teilhohlräume 7. Die Harztränkung der Doppelpolware und damit die Härtung der Doppelpolware bewirkt eine Verdichtung der Ober- und Unterware 5 und eine Versteifung der Polfäden 6 ohne die Sicherheits-Teilhohlräume 7 auszufüllen. In den Sicherheits-Teilhohlräumen 7 sind vorzugsweise Leckage-Detektoren 8 angeordnet, die über die Umfangsfläche des Innenraums 2 verteilt angeordnet sein können.

Anstelle der Detektoren 8 können auch andere Leckage-Anzeigeeinrichtungen vorgesehen sein.

Die Ober- und Unterware 5 bestehen aus verkreuzten Kett- und Schußfäden in einer Grundbindung oder abgeleiteten Bindung. Die Doppelpolware ist vorzugsweise in Kettsamttechnik gewebt, so daß die Polfäden 6 in Kettrichtung eingewebt sind, und zwar in einer V- oder W-Bindung. Die Länge der Polfäden, die als Abstandhalter den Abstand zwischen der Ober- und Unterware bestimmen, liegt zwischen 3 und 8 mm. Die Dichte liegt zwischen 20 und 80 Polfäden/cm². Als Fasermaterial für die Ober- und Unterware 5 und die Polfäden dienen hochfeste Fasern, wie z.B. Glasfasern, Kohlenstoffasern und Aramidfasern. Die verwendeten Fasern können dabei entweder als Stapelfasern zu Garnen versponnen sein oder als Mono- oder Multifilamente ausgebildet sein. Bei der Verwendung von Glasfasern können im Schuß auch teilweise Fasern eines thermoplastischen Materials eingewebt werden, vorzugsweise bis 25%.

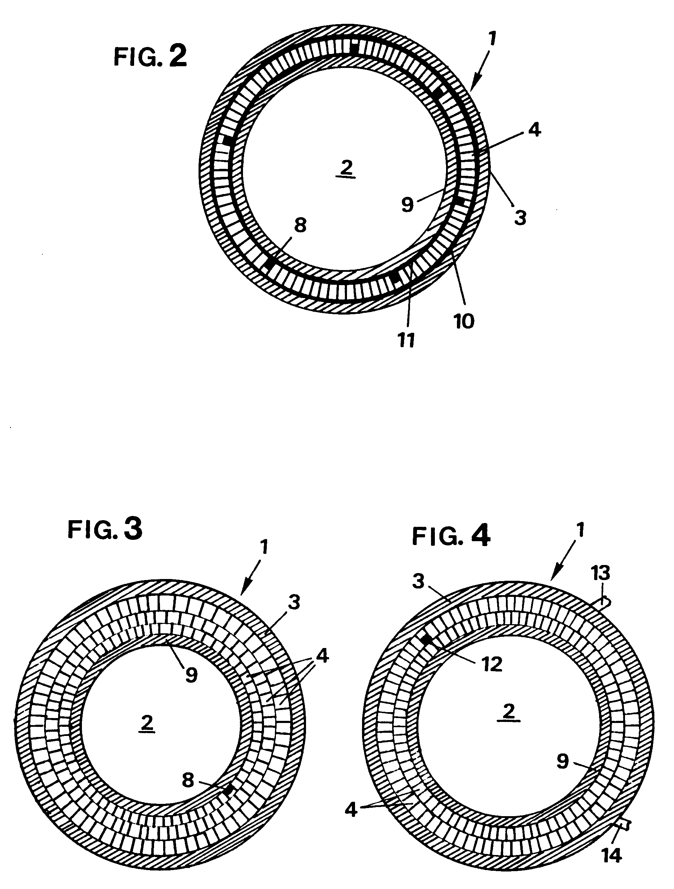

Zum Aufbau der doppelwandigen Haut wird die Wicklung 4 durch ein oder mehrere Bänder der unaufgeschnittenen Doppelpolware hergestellt, wobei die Wicklung vorzugsweise mit seitlich offenen Bandkanten erfolgt. Eine Wicklungsschicht aus dem oder den Bändern der Doppelpolware wird vorzugsweise mit ihren Bandkanten nebeneinanderliegend gewickelt, wobei der Abstand benachbarter Bandkanten klein gewählt wird, vorzugsweise stoßen die in der Wicklung benachbart liegenden Bandkanten aneinander. Die Bänder können in einer gewünschter Breite, vorzugsweise kleiner 90 cm, geschnitten oder unmittelbar, beispielsweise durch Weben, hergestellt sein. Gemäß Fig. 1 besteht die Wicklung 4 aus einer solchen Wicklungsschicht aus Doppelpolware. Gemäß Fig. 3 kann die Wicklung 4 auch aus mehreren übereinander gelegten Wicklungsschichten bestehen, wobei dann das oder die Bänder der folgenden Wickelschicht die Stoßkanten der vorherigen Wickelschicht überdecken. Die Stoßkanten aneinanderliegender Bänder der Wicklung 4 werden abschließend von der Wicklung 3 aus einem gegebenenfalls vorverharzten Verkleidungsmaterial, wie beispielsweise ein Flachgewebe oder ein Vlies, überdeckt. Die außenliegenden Seitenränder der Wicklung 4 sind durch die äußere Wicklung 3 verschließbar. Zum kopf- und bodenseitigen Verschließen der rohrförmigen Wandung des Kunststoffhohlkörpers können zusätzliche Wicklungsschichten über diese Öffnungen gelegt werden.

Zur Harztränkung der Wicklungen 3, 4 dient ein härtendes Reaktionsharz, wie z.B. ungesättigter Polyester, Epoxide, Vinylester, Phenole, PUR, Silicone (SI), Polyimide (PI) oder Polyamidimide (PAI). Ebenso geeignet sind UV-härtende Harze.

Zur Herstellung des faserverstärkten Kunststoffhohlkörpers gemäß Fig. 1 wird auf eine rotierende Trommel bzw. Kern ein oder mehrere Bänder der unaufgeschnittenen Doppelpolware vorzugsweise spiralförmig in Längsrichtung gewickelt, so daß die Wicklung 4 entsteht, und darüber eine Verkleidungsschicht, beispielsweise harzgetränkte Rovings, Vliese, Matten, Gewebe usw., gewickelt, so daß die Wicklung 3 entsteht. Die auf diese Weise erreichte Harztränkung führt auch zu einer Durchtränkung trocken gewickelter Bänder der Doppelpolware. Je nach Wickelverfahren können jedoch auch das oder die Bänder der Doppelpolware harzgetränkt gewickelt werden.

Des weiteren können die Bänder der Doppelpolware erst nach der Wicklung mit einem Reaktionsharz besprüht und nach der Härtung mit einer die Stoßkanten aneinanderliegender Bänder überdeckender Verkleidungsschicht, z.B. harzgetränkte Vliese, Matten, Gewebe usw., ummantelt sein.

Bei Kunststoffhohlkörpern, vorzugsweise Tanks, mit sogenannten Flachböden kann die zylinderförmige Wandung eine Wicklung 4 umfassen, an die ein flächiges Boden- und Kopfteil aus einer Doppelpolware ohne Überlappung mit der Wicklung 4 winklig angesetzt sind, wobei die Winkelbereiche von einer äußeren Verkleidungsschicht überdeckt sind und damit eine Hohlraumverbindung zwischen der zylinderförmigen Wandung und dem Boden- und Kopfteil bilden. Die Verkleidungsschicht wird vorzugsweise von einem erhärtbaren Flachgewebe oder Vlies gebildet.

Zum Aufbau der doppelwandigen Haut kann bei kugelförmigen Kunststoffhohlkörpern 1 die Doppelpolware aus einzelnen gefügten Segmenten bestehen.

Fig. 2 zeigt ein zweites Ausführungsbeispiel eines faserverstärkten Kunststoffhohlkörpers, das sich gegenüber dem in Fig. 1 gezeigten Ausführungsbeispiel dadurch unterscheidet, daß zusätzliche Glasfasermatten 10, 11 zwischen den Wicklungen 3, 9 der hochfesten Fasern und der Wicklung 4 der unaufgeschnittenen Doppelpolware eingelegt und mitverdichtet sind. Im übrigen gelten wieder die vorstehenden Ausführungen zu Fig. 1 und Fig. 3.

Gemäß einem weiteren Ausführungsbeispiel kann die Doppelpolware auch aus einer gewirkten Ober- und Unterware 5 bestehen.

Fig. 4 zeigt ein viertes Ausführungsbeispiel eines faserverstärkten Kunststoffhohlkörpers, das sich gegenüber dem in Fig. 1 gezeigten dadurch unterscheidet, daß die Wicklung 4 gezielt mit einem festen, flüssigen oder gasförmigen Medium, wie z.B. Wasser oder Öl, befüllbar oder durchströmbar ist zur temperierbaren Ausbildung des Kunststoffhohlkörpers. Dazu sind die seitlich die Wicklung 4 begrenzenden Randbereiche verschlossen. Die Leckage-Detektoren sind durch Temperatur- oder Füllstandsanzeiger 12 ersetzt. Außenseitige Ein- und Auslaßeinrichtungen 13, 14 können zum Be- und Entfüllen der Wicklung 4 dienen.

## Patentansprüche

1. Faserverstärkter Kunststoffhohlkörper mit einer Doppelwandung aus harzgetränkten Schichten hochfester Fasern, dadurch gekennzeichnet, daß die Doppelwandung eine den Hohlkörperraum (2) fluiddicht nach außen abschirmende, ohne innere Ausfüllung harzgehärtete doppelwandige Haut in Form einer Wicklung (4) aus einem oder mehreren Bändern einer unaufgeschnittenen Doppelpolware mit beabstandeter Ober- und Unterware (5) und bindenden Polfäden (6) aufweist, wobei das oder die Bänder mit seitlich offen aneinanderliegenden Bandkanten in einer Wickelschicht angeordnet und mit einer die Stoßkanten überdeckender inneren und äußeren Verkleidungsschicht (9, 3) ummantelt sind.

2. Faserverstärkter Kunststoffhohlkörper nach Anspruch 1, dadurch gekennzeichnet, daß die Doppelpolware aus Glasfasergarnen gewebt oder gewirkt ist, wobei im Schuß gegebenenfalls Fasern aus einem thermoplastischen Material einsetzbar sind.

3. Faserverstärkter Kunststoffhohlkörper nach Anspruch 1 oder 2, dadurch gekennzeichnet, daß die Doppelpolware in Kettsamttechnik hergestellt ist.

4. Faserverstärkter Kunststoffhohlkörper nach einem der Ansprüche 1 bis 3, dadurch gekennzeichnet, daß die Länge der Polfäden (6) zwischen 3 und 8 mm liegt.

5. Faserverstärkter Kunststoffhohlkörper nach einem der Ansprüche 1 bis 4, dadurch gekennzeichnet, daß die Dichte zwischen 20 und 80 Polfäden/cm² liegt.

6. Faserverstärkter Kunststoffhohlkörper nach einem der Ansprüche 1 bis 5, dadurch gekennzeichnet, daß die Wicklung (4) von einer durch Harztränkung gehärteten äußeren Wicklung (3) ummantelt ist.

7. Faserverstärkter Kunststoffhohlkörper nach einem der Ansprüche 1 bis 6, dadurch gekennzeichnet, daß die innere und äußere Verkleidungsschicht (9, 3) Wicklungen (3, 9) hochfester Fasern sind, zwischen denen die Wicklung (4) aus einer Doppelpolware als Kernlage angeordnet ist.

8. Faserverstärkter Kunststoffhohlkörper nach einem der Ansprüche 1 bis 7, dadurch gekennzeichnet, daß die Doppelpolware in einem Schichtenverband zwischen zwei Deckschichten einer Wicklung (3, 9) hochfester Fasern und angrenzender Fasermatten angeordnet ist.

9. Faserverstärkter Kunststoffhohlkörper nach einem der Ansprüche 1 bis 8, dadurch gekennzeichnet, daß die hochfesten Fasern der Wicklungen (3, 9) Glasfaserrovings sind.

10. Faserverstärkter Kunststoffhohlkörper nach einem der Ansprüche 1 bis 9, dadurch gekennzeichnet, daß die Bänder der Wicklung (4) eine Breite kleiner 90 cm besitzen.

11. Faserverstärkter Kunststoffhohlkörper nach einem der Ansprüche 1 bis 10, dadurch gekennzeichnet, daß die doppelwandige Haut mindestens einschichtig gewickelt ist.

## Claims

1. Fibre-reinforced hollow plastic body with a double wall of resin-impregnated layers of high-strength fibres, characterized in that the double wall comprises a double-walled shell which seals off the hollow body space (2) fluid-tightly towards the outside and is resin-cured without inner filling and is in the form of a winding (4) of one or more tapes of an uncut double pile cloth with spaced-apart top and bottom cloths (5) and binding pile threads (6), the tape or tapes being arranged in a wound layer with laterally open adjacent tape edges and being sheathed by an inner and outer finishing layer (9, 3) overlaying the butted edges.

2. Fibre-reinforced hollow plastic body according to claim 1, characterized in that the double pile cloth has been woven or knitted from glass fibre yarns, the weft optionally containing fibres made of a thermoplastic material.

3. Fibre-reinforced hollow plastic body according to claim 1 or 2, characterized in that the double pile cloth has been produced by the warp velvet technique.

4. Fibre-reinforced hollow plastic body according to any one of claims 1 to 3, characterized in that the length of the pile threads (6) is between 3 and 8 mm.

5. Fibre-reinforced hollow plastic body according to any one of claims 1 to 4, characterized in that the density is between 20 and 80 pile threads/cm².

6. Fibre-reinforced hollow plastic body according to any one of claims 1 to 5, characterized in that the winding (4) is sheathed by an outer winding (3) hardened by resin impregnation.

7. Fibre-reinforced hollow plastic body according to any one of claims 1 to 6, characterized in that the inner and outer finishing layer (9, 3) are windings (3, 9) of high-strength fibres between which the winding (4) of a double pile cloth is arranged as core layer.

8. Fibre-reinforced hollow plastic body according to any one of claims 1 to 7, characterized in that the double pile cloth has been arranged in a layered assembly between two top layers of a winding (3, 9) of high-strength fibres and adjoining fibre mats.

9. Fibre-reinforced hollow plastic body according to any one of claims 1 to 8, characterized in that the high-strength fibres of the windings (3, 9) are glass fibre rovings.

10. Fibre-reinforced hollow plastic body according to any one of claims 1 to 9, characterized in that the tapes of the winding (4) are less than 90 cm in width.

11. Fibre-reinforced hollow plastic body according to one of claims 1 to 10, characterized in that the double-walled shell has been wound in at least one layer.

## Revendications

1. Corps creux en matière synthétique renforcé de fibres avec une double paroi en couches de fibres à haute résistance imprégnées de résine, caractérisé en ce que la double paroi présente une peau à double paroi durcie de résine sans remplissage intérieur, qui protège l'espace du corps creux (2) vers l'extérieur de manière étanche aux fluides, en forme d'un enroulement (4) constitué par un ou plusieurs rubans d'un double poil tissu, non coupé, avec une pièce supérieure et une pièce inférieure (5), qui sont espacées, et des fils de poil (6), qui les relient, le ou les rubans étant agencés avec les bords de ruban contigus ouverts latéralement dans une couche d'enroulement et étant enveloppés de couches de revêtement intérieure et extérieure (9, 3) qui recouvrent les bords bout-à-bout.

2. Corps creux en matière synthétique renforcé de fibres selon la revendication 1, caractérisé en ce que le double poil tissu est tissé ou tricoté à partir de fils en fibres de verre, des fibres en matière thermoplastique pouvant le cas échéant être insérées dans la trame.

3. Corps creux en matière synthétique renforcé de fibres selon la revendication 1 ou 2, caractérisé en ce que le double poil tissu est réalisé selon la technique du velours par chaîne.

4. Corps creux en matière synthétique renforcé de fibres selon l'une des revendications 1 à 3, caractérisé en ce que la longueur des fils de poil (6) se situe entre 3 et 8 mm.

5. Corps creux en matière synthétique renforcé de fibres selon l'une des revendications 1 à 4, caractérisé en ce que la densité se situe entre 20 et 80 fils de poil/cm².

6. Corps creux en matière synthétique renforcé de fibres selon l'une des revendications 1 à 5, caractérisé en ce que l'enroulement (4) est enveloppé par un enroulement extérieur (3) durci par imprégnation de résine.

7. Corps creux en matière synthétique renforcé de fibres selon l'une des revendications 1 à 6, caractérisé en ce que les couches de revêtement intérieure et extérieure (9, 3) sont des enroulements (3, 9) de fibres à haute résistance, entre lesquelles l'enroulement (4) en double poil tissu est placé comme couche de noyau.

8. Corps creux en matière synthétique renforcé de fibres selon l'une des revendications 1 à 7, caractérisé en ce que le double poil tissu est placé dans un assemblage de couches entre deux couches de recouvrement d'un enroulement (3, 9) de fibres à haute résistance et des nattes de fibres contiguës.

9. Corps creux en matière synthétique renforcé de fibres selon l'une des revendications 1 à 8, caractérisé en ce que les fibres à haute résistance des enroulements (3, 9) sont des stratifils de fibres de verre.

10. Corps creux en matière synthétique renforcé de fibres selon l'une des revendications 1 à 9, caractérisé en ce que les rubans de l'enroulement (4) possèdent une largeur inférieure à 90 cm.

11. Corps creux en matière synthétique renforcé de fibres selon l'une des revendications 1 à 10, caractérisé en ce que la peau à double paroi est enroulée au moins en une couche.
